# EUROPEAN PATENT SPECIFICATION

(11) **EP 4 227 853 B1**
(45) Date of publication and mention of the grant of the patent: **23.07.2025**
(21) Application number: 22305138.4
(22) Date of filing: 09.02.2022
(51) Int. Cl.: G06F 18/214

(54) **USER EQUIPMENT FOR IMPLEMENTING A CONTROL IN A SET OF USER EQUIPMENTS**
BENUTZERGERÄTE ZUM IMPLEMENTIEREN EINER STEUERUNG IN EINEM SATZ VON BENUTZERGERÄTEN
ÉQUIPEMENT UTILISATEUR POUR LA MISE EN OEUVRE D'UNE COMMANDE DANS UN ENSEMBLE D'ÉQUIPEMENTS UTILISATEURS

(43) Date of publication of application: 16.08.2023
(73) Proprietor: Mitsubishi Electric R&D Centre Europe BV, 1119 NS Schiphol Rijk Amsterdam (NL); MITSUBISHI ELECTRIC CORPORATION, Chiyoda-ku Tokyo 100-8310 (JP)
(72) Inventor: CORLAY, Vincent, 35708 RENNES CEDEX 7 (FR); BOUTTIER, Arnaud, 35708 RENNES CEDEX 7 (FR)
(74) Representative: Plasseraud IP

(56) References cited:
- WO-A2-2018/125686
- US-A1- 2018 284 741
- US-A1- 2022 036 123

## Description

The invention relates to a user equipment that is adapted for implementing a control in a set of user equipments. It also relates to a corresponding process and set of user equipments. The invention has numerous applications, in particular in the context of the internet of things.

### -- BACKGROUND OF THE INVENTION --

There are systems comprised of several user equipments, where each of the user equipments determines its own state based on measurements of at least one of the other user equipments. In this way, a knowledge of the respective states of several or all user equipments is progressively built and continuously updated, which allows controlling the operation of one, some or all the user equipments in a consistent manner. When several of the user equipments are controlled, their control may be intended to achieve a global mission, and in such case referred to as distributed control.

One example of such applications is the in-flight control of a set of several unmanned aerial vehicles, also known as flying drones, for instance when these drones are intended to adopt prescribed relative positions. But many other applications exist, and the state definition to be considered for each user equipment for implementing the control may vary depending on each application. For the application to drones, each drone constitutes a separate user equipment, and its state is comprised of its in-space position as such position may be measured by a positioning system. Many other applications may benefit from control based on measurements related to several of the user equipments, as for instance network synchronisation. For this latter application, radio devices are the user equipments and their states are respective reference times.

In such system, each user equipment updates repetitively its own state based on a knowledge of the states of several other user equipments, also possibly based on the knowledge of the state of only one other user equipment. A better precision is provided by such control system in the determination of the respective states of the user equipments, compared to separate individual determinations of the states of the user equipments. To this end, each user equipment needs to obtain successive measurements of the states of some of the other user equipments, possibly including measurements of its own state but not necessarily. But practically and because of many reasons, one or several of the state measurements that are required for updating the state of one of the user equipments is/are not available at the time of performing the update. To avoid blocking the state updating process or simply improving its accuracy, the state measurements are supplemented with state predictions within the user equipment that is currently updating its own state. Each state prediction is based on prior state measurements that are available within the user equipment performing the state update, and a prediction model issues the state predictions from the prior state measurements. Then, a respective state estimate is determined for each of the user equipments that is used for performing the update, based on the state measurements and state predictions obtained for them. The state update is then determined from these estimates. Instead of implementing the prediction model with the prior state measurements, it is possible to implement it based on statistics that are derived from these prior state measurements.

A similar system is for example disclosed in document US 2022/036123 A1.

In a known manner, a user equipment which is adapted for implementing a control in a set of user equipments, where the user equipment considered updates its own state based on state measurements and state predictions obtained for a subset of the user equipments, comprises:
- storage means, which are adapted for storing at least some of the state measurements obtained for each user equipment of the subset, or for storing statistics that are derived from these state measurements obtained for each user equipment of the subset;
- a prediction module, which is adapted for inferring a state prediction for any of the user equipments of the subset, by implementing a prediction model with state measurements or statistics recovered from the storage means;
- a state estimation module, which is adapted for issuing a state estimate for each of the user equipments of the subset, by combining the state measurements and the state predictions of the user equipments of the subset;
- a resource control module, adapted for selecting configuration parameters intended to control an operation of resources of the user equipments based on the state estimates issued by the state estimation module; and
- a state control module, adapted for updating the state of the user equipment considered, also based on the state estimates issued by the state estimation module.

The state measurements may be obtained internally to the user equipment considered, for example when it includes an appropriate measurement module for measuring the state(s) of one or several of the other user equipments. Alternatively, the state measurements may be received via communication by the user equipment considered from any external appropriate means, including measurement means which are on-board each user equipment and suitable for measuring the respective state of this user equipment.

In case statistics are stored in the storage means, these statistics may have been provided by the state estimation module at an earlier time.

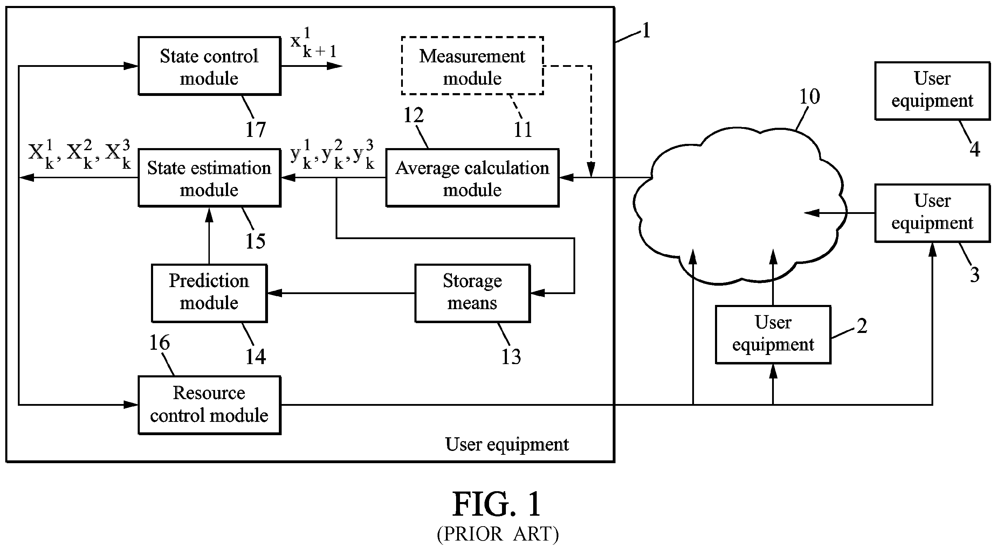

Such architecture of the user equipment is shown in Figure 1, where the reference numbers have the following meanings:
1, 2, 3, 4 four user equipments
10 resources assigned to the user equipments, possibly including communication resources of wireless type
13 the storage means as mentioned above, for the user equipment 1
14 the prediction module of the user equipment 1
15 the state estimation module of the user equipment 1
16 the resource control module of the user equipment 1
17 the state control module of the user equipment 1

In the example represented, the user equipment 1 receives state measurements from the user equipments 2 and 3, but not from the user equipment 4. y¹ₖ, y²ₖ, and y³ₖ thus denote the state measurements obtained for time k and for user equipments 1, 2 and 3 respectively. These state measurements are fed into the state estimation module 15. Prior state measurements obtained before time k for the user equipments 1, 2 and 3 are stored in the storage means 13 and fed into the prediction module 14 for this latter to infer state predictions relating to time k and user equipments 1, 2 and 3. It is repeated that using within the user equipment 1 state measurements and predictions relating to this user equipment 1 is possible but not compulsory.

X¹ₖ, X²ₖ, and X³ₖ denote the state estimates issued for time k for the user equipments 1, 2 and 3, respectively, by the state estimation module 15. These state estimates are obtained by combining in a well-known manner the state measurements and state predictions which relate to time k.

The resource control module 16 may be a communication control module when the configuration parameters are intended to control communication resources that are implemented between the user equipments.

Possibly, for selecting the configuration parameters, the resource control module 16 may also take into account requirements issued by the state control module 17, for example when the states of the user equipments are varying rapidly.

Finally, x¹ₖ and x¹ₖ₊₁ denote the true states of user equipment 1 for times k and k+1, respectively. The state x¹ₖ₊₁ is obtained after the action of the state control module 17 by modifying the state x¹ₖ via other inputs such as activation of actuators of the user equipment 1, external instruction commands, etc. Possibly, the state control module 17 of the user equipment 1 may operate in a coordinated manner with the other user equipments, so as to form a distributed control system.

For such control operations, the accuracy of the state which is produced by the state control module 17 highly depends on the accuracy of the state measurements and state predictions that are used. In addition, the accuracy of each state prediction depends on both the measurements that are inputted into the prediction model, and the validity of the prediction model used. However, a prediction model which is valid at one time may no longer be valid later. Due to such limited validity of the prediction model, the state predictions may be less accurate.

The state measurements, i.e. y¹ₖ, y²ₖ, and y³ₖ in Figure 1, can be more accurate, and thus more reliable, if they are each obtained from several basic state measurements all relating to time k. To this purpose, the collection frequency of the basic state measurements should be higher that the state update frequency, and the state measurements that are inputted into the state estimation module 15 and storage means 13 for time k are each an average of the basic state measurements relating to same time k. Such average is computed by the average calculation module 12 from the basic state measurements received by the user equipment 1 or provided by its internal measurement module 11 if any.

In the frame of the present description, the prediction model which is implemented by the prediction module 14 may perform a joint estimation of the states of the user equipments of the subset, i.e. the user equipments 1, 2 and 3 in the example of Figure 1, or be comprised of individual models that relate separately to the user equipments of the subset.

The article entitled "Reinforcement Learning-Based Control and Networking Co-Designs for Industrial Internet of Things", by H. Xu et al., IEEE Journal on Selected Areas in Communications, Vol. 38, No. 5, May 2020, discloses training the communication control module, i.e. module 16 in Figure 1, through reinforcement learning so that it takes the optimal decision given the current state of the system. The optimal decision consists in recovering a maximum number of basic state measurements while avoiding congestion, in particular congestion of the measurement means or of communication means that connect the user equipments to one another for transmitting the state measurements.

Starting from this situation, one object of the present invention consists in improving the accuracy of the state estimates which are determined by a user equipment for implementing a control, while reducing a resource requirement.

A subsidiary object of the invention is that such improvement can be implemented from an already existing user equipment architecture.

### -- SUMMARY OF THE INVENTION --

For meeting these objects or others, a first aspect of the present invention proposes a user equipment which comprises in addition to the storage means, prediction module, state estimation module, resource control module and state control module as recited above:
- a model improvement module, which is adapted for implementing alternately a training mode and an idle mode.

In the training mode, the model improvement module determines the prediction model to be implemented next by the prediction module, from the state measurements or statistics that are obtained for the user equipments of the subset, or from the state estimates that are issued by the state estimation module.

The model improvement module is furthermore configured for injecting the prediction model as determined in the training mode into the prediction module. In this way, the injected prediction model is used by the prediction module when the model improvement module is in the idle mode.

According to another feature of the invention, the model improvement module is further adapted to control the resource control module for adjusting a reliability of the state measurements obtained for each user equipment of the subset at a level during a time period dedicated to the training mode higher than another level of this reliability that is effective during a prior or subsequent time period dedicated to the idle mode.

Thus, the control implementation requires less resources during the time periods dedicated to the idle mode, while providing state predictions which are reliable enough. This reliability of the state predictions is provided by the training mode, where the prediction model is trained using more resources. In this way, the prediction models which are used successively by the prediction module are more reliable, thus improving the quality of the state estimates which are issued by the state estimation module. The invention provides in this way an improved trade-off between resource requirements and accuracy of the state estimations which are used by the state control module.

Possibly, in the idle mode, the model improvement module may assess a validity of the prediction model which is currently implemented by the prediction module, as this prediction model has been previously determined by the model improvement module during the time period dedicated to the training mode.

In possible embodiments of the invention, the resources may be adapted to allow improving an accuracy of each state measurement as issued directly by state measurement means which are used. In such case, the state measurement accuracy provides the reliability of the state measurements.

In other possible embodiments of the invention, each state measurement of any user equipment of the subset, as stored by the storage means or used by the state estimation module, may be obtained from one or several basic state measurements relating to the same user equipment. Then, the model improvement module may be further adapted to control the resource control module for adjusting a frequency of the basic state measurements that are obtained for each user equipment of the subset, so that a value of this frequency during the time period dedicated to the training mode is higher than another value of the frequency that is effective during the prior or subsequent time period dedicated to the idle mode. In such embodiments of the invention, the reliability of the state measurements is improved by increasing the number of the basic state measurements that result in one state measurement.

For some applications of the invention, one or several of the following additional features may be implemented advantageously:
- the user equipment may be adapted for communicating with the other ones by implementing a wireless communication mode, and for receiving wirelessly the state measurements or basic state measurements of at least one of the user equipments of the subset. Then, the resources of the set of user equipments may comprise radio-communication resources;
- the user equipment may be adapted so that the state of any of the user equipments of the subset comprises coordinate values of a position of the user equipment of the subset. In such case, the user equipment may be further adapted for operating with the basic state measurements being provided by at least one positioning system. The basic state measurements for each user equipment of the subset may be then transmitted wirelessly between the user equipments or internally to each user equipment;
- the model improvement module may be adapted to switch from the training mode to the idle mode once a matching criterion of the training mode is met by the prediction model that is currently being determined, between the state measurements and the state predictions inferred using this prediction model that is currently being determined, or after a request to free some resources has been received by the user equipment, or at a time issued by a scheduling algorithm;
- the model improvement module may be adapted to switch back from the idle mode to the training mode when at least one of the following conditions occurs:
   a matching criterion of the idle mode is no longer met between the state measurements and the state predictions as issued by the prediction module,
   after receiving an indication that an amount of the resources is available,
   after receiving an indication that the reliability of the state measurements is above a predetermined threshold, and
   at a time issued by the scheduling algorithm; and
- the configuration parameters, that are selected by the resource control module based on the state estimates issued by the state estimation module, and possibly also based on requirements from the state control module, may be suitable for controlling at least one of a frequency of the basic state measurements, a transmission frequency of these basic state measurements, modulation and coding schemes, and at least one transmission power implemented between the user equipments.

A second aspect of the invention proposes a process for implementing a control in a set of user equipments, where each user equipment updates its own state based on state measurements and state predictions obtained for a subset of the user equipments. To this purpose, each user equipment performs the following steps:
- storing at least some of the state measurements obtained for each user equipment of the subset, or storing statistics derived from these state measurements obtained for each user equipment of the subset;
- inferring a state prediction for any of the user equipments of the subset, by implementing a prediction model with state measurements or statistics which have been stored previously;
- issuing a respective estimate of the state for each of the user equipments of the subset, by combining the state measurements and state predictions of the user equipments of the subset;
- selecting configuration parameters intended to control an operation of the resources of the user equipments, based on the state estimates; and
- updating a state of the user equipment, also based on the state estimates,

According to the invention, at least one of the user equipments, referred to as model improvement user equipment, operates alternately in a training mode and an idle mode.

In the training mode, the prediction model is determined from the state measurements or statistics that are obtained for each user equipment of the subset, or from the state estimates issued for each user equipment of the subset.

The process then furthermore comprises updating the prediction model which is implemented for inferring the state predictions, according to the prediction model as determined in the training mode.

In addition, the configuration parameters are adjusted so that a reliability of the state measurements obtained for each user equipment of the subset is at a level during a time period dedicated to the training mode higher than another level of this reliability that is effective during a prior or subsequent time period dedicated to the idle mode.

Possibly, in the idle mode, a validity of the prediction model which is currently implemented may be assessed, as this prediction model has been previously determined during the time period dedicated to the training mode.

In possible implementations of the invention, for any of the user equipments of the subset, each state measurement stored or used for issuing one of the state estimates may be obtained from one or several basic state measurements. Then, a frequency of the basic state measurements that are obtained for each user equipment of the subset may be adjusted so that a value of this frequency during the time period dedicated to the training mode is higher than another value of the frequency that is effective during the prior or subsequent time period dedicated to the idle mode.

The model improvement user equipment may be in accordance with the first invention aspect.

In a similar manner to the first invention aspect, the following features may be implemented for the process of the second invention aspect:
- the state measurements or basic state measurements may be transmitted wirelessly to the model improvement user equipment by at least one of the user equipments of the subset;
- the state of any of the user equipments of the subset may comprise coordinate values of a position of this user equipment of the subset. **In** such case, the basic state measurements may be provided by at least one positioning system, and the basic state measurements for each user equipment of the subset may be then transmitted to the model improvement user equipment wirelessly or internally to the model improvement user equipment;
- the model improvement user equipment may switch from the training mode to the idle mode once a matching criterion of the training mode is met by the prediction model that is currently being determined, between the state measurements and the state predictions inferred using this prediction model, or after a request to free some resources has been received by the model improvement user equipment, or at a time issued by a scheduling algorithm;
- the model improvement user equipment may switch back from the idle mode to the training mode when at least one of the following conditions occurs:
   a matching criterion of the idle mode is no longer met between the state measurements and the state predictions as used for issuing the state estimates,
   after receiving an indication that an amount of the resources is available,
   after receiving an indication that the reliability of the state measurements is above a predetermined threshold, and
   at a time issued by the scheduling algorithm; and
- the configuration parameters may be selected based on the state estimates, and possibly also based on control requirements, for controlling at least one of a frequency of the basic state measurements, a transmission frequency of these basic state measurements, modulation and coding schemes, and at least one transmission power implemented between the user equipments.

Finally, a third aspect of the invention proposes a set of user equipments that are adapted to implement a control, wherein at least one of these user equipments is in accordance with the first invention aspect.

These and other features of the invention will be now described with reference to the appended figures, which relate to preferred but not-limiting embodiments of the invention.

### -- BRIEF DESCRIPTION OF THE DRAWINGS --

Figure 1, already described, illustrates an architecture of a user equipment suitable for implementing a control, as known before the present invention.
Figure 2 illustrates a possible application of the invention.
Figure 3 corresponds to Figure 1 for a user equipment that is in accordance with the present invention.
Figure 4 illustrates schematically a prediction model which may be implemented in the user equipment of Figure 3.

For clarity sake of the following detailed description, same reference numbers which are indicated in different ones of the figures, including Figure 1 already described, denote identical elements or elements with identical function.

### -- DETAILED DESCRIPTION OF THE INVENTION --

The invention is now described for the particular application of controlling a set of unmanned aerial vehicles, commonly referred to as drones, so that they have desired relative in-flight positions. For such illustrating example, each drone constitutes a separate user equipment as introduced before, and the respective current in-flight position of each drone is its current state. The state of drone i at time k is thus denoted xⁱₖ, where i is an integer index for identifying each drone separately from the others in the whole set.

However, the invention can be applied to many systems other than a drone set, the type of the user equipment depending on each system as well as the states to be considered for these user equipments.

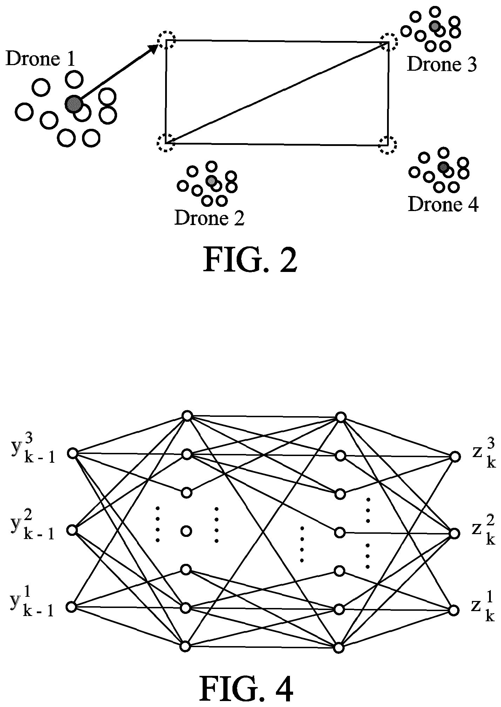

Figure 2 illustrates a simple system in which the respective in-flight positions of four drones are to be controlled, for example using distributed control. The drones are labelled with the reference numbers 1, 2, 3 and 4, corresponding to the integer index i as just introduced. For each drone i, the corresponding dark-filled circle indicates its true position at time k: xⁱₖ. The target of the distributed control that is implemented in the drone set is forming and maintaining a prescribed rectangular pattern with the relative positions of the drones 1-4, as an illustrating but not-limiting example.

Each drone i may be provided on-board with its own GPS receiver which constitutes the measurement module for this drone i, GPS standing for "Global Positioning System", but any other positioning system may be used alternatively. Thus, for drone 1, its measurement module 11 is comprised of the GPS positioning receiver. Each drone i is thus capable in principle of collecting at least one basic measurement of its own position relating to any time k, and preferably several such measurements.

Each drone i may also be provided with communication means (not shown) which are designed for communicating with the other drones. The communication means may then be part of the resources 10, in addition to the measurement modules 11. These resources 10 may also include other communication components, such as a centre node or master node, and they may be at least partly of wireless type, in particular of radio type. Thus, each drone can transmit the basic measurements of its own position as provided by its GPS receiver, to at least some of the other drones of the set.

Other systems may be used alternatively for measuring the positions of the drones. For example, each drone i may be provided on-board with appropriate means for measuring the respective positions of at least some of the other drones. Still another possibility is that each drone i receives wirelessly the respective position measurements of at least some of the other drones from an external position measuring system. One will understand that the invention applies whatever the actual measurement means and communication mode which are used for providing at least one of the drones with the necessary position measurements.

The description is now continued for drone 1, assuming that drone 1 does not receive the position measurements of drone 4, but only those of drones 2 and 3. Drones 1, 2 and 3 thus form a subset within the whole drone set, which is used for implementing the control within drone 1. Let j be an integer index that identifies the drones of this subset, i.e. j=1, 2 or 3. The basic position measurements relating to time k and drone j, when they are plural, are averaged by the average calculation module 12 for issuing a resulting position measurement which relates again to time k and drone j, and which is y^{j}ₖ. When only one basic position measurement is collected for time k and drone j, it constitutes directly the position measurement y^{j}ₖ. Also possibly no basic measurement may be collected for time k and drone j. Due to measurement errors and noise, each position measurement y^{j}ₖ may be different from the corresponding true position x^{j}ₖ. In Figure 2, the position measurements are represented as emptied circles for each drone i, and each dotted-line circle represents its target relative position with respect to the other drones.

The basic position measurements of drone 1 may be provided internally by the GPS receiver 11 and also averaged by the average calculation module 12 of drone 1 to provide the position measurements y¹ₖ. However, it is not compulsory that drone 1 uses its own position measurements, and it may use the position measurements of drones 2 and 3 only. We will consider below that the position measurements y¹ₖ of drone 1 are available for it, in addition to the position measurements y²ₖ and y³ₖ.

Let's assume that drone 1 has collected beforehand the position measurements of the drones 1, 2 and 3 for times k-1, k-2... prior to time k, respectively denoted y¹ₖ₋₁, y¹ₖ₋₂..., y²ₖ₋₁, y²ₖ₋₂... and y³ₖ₋₁, y³ₖ₋₂... Here, k, k-1, k-2... denote successive times at which drone 1 updates its position, leading to the true positions x¹ₖ₊₁, x¹ₖ, x¹ₖ₋₁... Based on the prior position measurements y¹ₖ₋₁, y¹ₖ₋₂..., y²ₖ₋₁, y²ₖ₋₂... and y³ₖ₋₁, y³ₖ₋₂... stored by the storage means 13, the prediction module 14 infers position predictions for time k respectively for the drones 1-3. Alternatively, the storage means 13 may store a statistical distribution for each drone j, which is obtained from the prior position measurements y^{j}ₖ₋₁, y^{j}ₖ₋₂... Such statistical distribution may be transmitted by the state estimation module 15 to the storage means 13. The position predictions are inferred by the prediction module 14 using a prediction model which will be discussed later. The position measurements and position predictions relating to time k are all fed into the state estimation module 15 which combines them all together for issuing the respective position estimates X¹ₖ, X²ₖ and X³ₖ of the drones 1-3 all relating to time k. The remainder of the operation of the control is unchanged with respect to the prior art already described.

The reliability of each of the position measurements yⁱₖ, y^{j}ₖ₋₁, yⁱₖ₋₂... may be improved by increasing the number of the basic position measurements that relate to the drone j and the time of concern, and that are combined through averaging by the average calculation module 12. It may be therefore necessary that the frequency of collection of the basic position measurements is higher than the state update frequency. Adjusting the collection frequency of the basic position measurements involves configuration parameters of the drone set as measurement frequencies and transmission bandwidth. It is thus possible to increase the reliability of the position measurements yⁱₖ, y^{j}ₖ₋₁, y^{j}ₖ₋₂... that are used for implementing the distributed control, but at the cost of increased resource requirement.

Another issue relates to the validity of the prediction model that is implemented by the prediction module 14. Indeed, this prediction model constitutes an assumption of the movements of the drones 1, 2 and 3, and provides the predictions of their positions for time k from their preceding positions. But this prediction model may be no longer valid for any reason such as a new external instruction command, an effect of at least one drone actuator, any interfering event, etc.

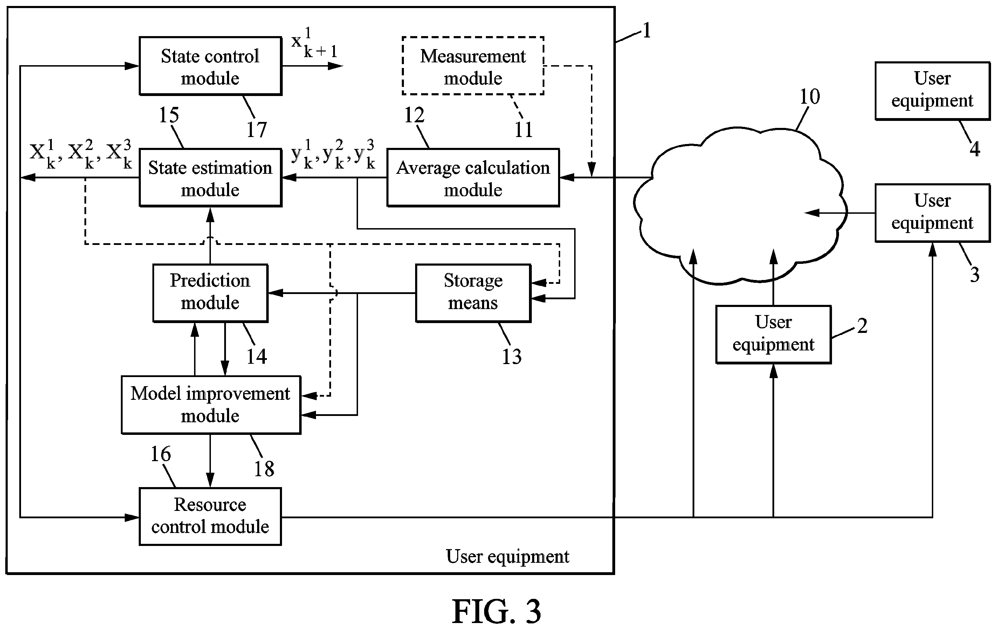

The operation of the whole control can be supported by equations derived from the well-known Bayesian framework. It combines the position measurements and position predictions for obtaining the updated position estimates Xⁱₖ. This framework shows that the accuracy of the position estimates Xⁱₖ strongly depends on the reliability of the measurements and predictions. As indicated above, the reliability of the measurements can be improved by increasing the frequency of the basic measurements that are inputted into the average calculation module 12 for at least some of the drones j. But an insufficient validity of the prediction model which is implemented by the prediction module 14 constitutes a weakness of the whole control. The invention improvement which is described below with reference to Figure 3 is intended to reduce or cure this weakness.

As shown in Figure 3, the control system that is on-board drone 1, and preferably also for the other drones, is completed with an additional module 18 called model improvement module. For this reason, drone 1 has been called model improvement user equipment in the general part of this description. Thus, the architecture of Figure 1, known from prior art, and including the modules 11-17, is maintained but combined with the new module 18. This module 18 is designed according to the invention so as provide an improved trade-off between resource demand and prediction reliability. According to the invention, the model improvement module 18 is connected for receiving the position measurements y^{j}ₖ from the storage means 13, in parallel with the prediction module 14, and for controlling the resource control module 16. Instead of being connected for receiving the position measurements y^{j}ₖ from the storage means 13, the model improvement module 18 may alternatively be connected for receiving the position estimates Xⁱₖ or statistics of the position measurements from the state estimation module 15, in parallel with the resource control module 16 and the state control module 17. The model improvement module 18 is also connected to the prediction module 14 for updating the prediction model that is actually implemented by this latter, and for monitoring an accuracy of the resulting position predictions. Most conveniently, the model improvement module 18 may be implemented as a software module.

The model improvement module 18 is designed for operating alternately in a training mode and an idle mode. The model improvement module 18 operates in either mode while the control continues being implemented as described before. The training mode is dedicated to issuing a new prediction model to be used next by the prediction module 14. This new prediction model will provide more accurate position predictions. Indeed, the training mode leads to updating the prediction model to be implemented by the prediction module 14, so as to take into account changes that may have occurred in the operation of the set of drones, for example external instruction commands or perturbations. At the end of each time period dedicated to the training mode, the updated prediction model is injected by the model improvement module 18 into the prediction module 14 so as to be used instead of the current one. The model improvement module 18 then switches to the idle mode, where it may monitor the validity of the prediction model as newly implemented by the prediction module 14, but not necessarily. Because the prediction model has been trained just before during the preceding time period dedicated to the training mode, its validity is more ensured, and the resulting position predictions are more accurate and reliable. During the next time period dedicated to the idle mode, the model improvement module 18 may check the validity of this prediction model by comparing each position measurement y^{j}ₖ with the corresponding position prediction as issued by the prediction module 14.

In the training mode, a sufficient number of position measurements needs to be collected, so that the prediction model that is currently being trained by the model improvement module 18 is accurate enough. To this end, the model improvement module 18 forces the resource control module 16 in the training mode so that the basic position measurements are performed and transmitted at a high enough frequency. Conversely, during the idle mode, the requirement of high enough number of basic position measurements no longer holds, since the prediction model is accurate enough for estimating the position measurements. Thus, the demand in measurements and communication resources during the time period dedicated to the idle mode can be lowered. In particular, the frequency of the basic position measurements and of their transmission as controlled by the resource control module 16 can be lowered significantly with respect to the training mode. The transmission load of the communication resources is thus reduced, but almost no loss in the accuracy of the position estimates results from such reduction thanks to the reliability of the prediction model as provided by the training mode. This benefit of the invention applies in particular when the communication between the user equipments, i.e. the drones, is of radio type. A radio load reduction is then obtained thanks to the invention.

So during each time period dedicated to the training mode, the model improvement module 18 controls the resource control module 16 to get enough basic position measurements to train a new prediction model. The position measurements yⁱₖ, y^{j}ₖ₋₁, y^{j}ₖ₋₂... obtained are then more reliable because of being based each on an increased number of basic position measurements. The cost for that is the resource requirement in the training mode for collecting the basic position measurements at a frequency that is high enough. This resource requirement is met during each training mode time period by forcing suitable configuration parameters of the drone set. The reliable position measurements y^{j}ₖ which are thus collected for the drones 2 and 3 and internally within drone 1 for the exemplifying application of Figures 1 and 3, are used by the state estimation module 15 for obtaining more accurate position estimates X^{j}ₖ, and also used in parallel by the model improvement module 18 for training the new prediction model. At this time, the prediction module 14 still implements the prediction model which has been provided by the model improvement module 18 at the end of the preceding time period dedicated to training mode. During each time period dedicated to the training mode, the state estimation module 15 mostly relies on the position measurements, because these latter are sufficient in number and accuracy.

Figure 4 illustrates the prediction model as being trained by the model improvement module 18 in the training mode. Such representation is common for the Man skilled in artificial intelligence. The inputs of the model are the position measurements y^{j}ₖ₋₁ of drones 1, 2 and 3 for the application example of Figure 2, at at least one preceding time in the operation of the whole control system, i.e. k-1, as indicated in the left part of Figure 4. Possibly, these position measurements y^{j}ₖ₋₁ may be replaced by the position estimates X^{j}ₖ₋₁ issued for the drones 1, 2 and 3 and for time k-1, or by the related statistical distributions. The outputs of the prediction model are the position predictions for these drones 1, 2 and 3 and for the next time, i.e. k, as denoted by z^{j}ₖ in the right part of the figure. The labels used for the training are the position measurements obtained for time k: y¹ₖ, y²ₖ and y³ₖ. In different embodiments of the invention, the prediction model may deal with the drones j all together, or it may be comprised of individual prediction models that relate separately and respectively to the drones j.

The end of each training mode period may be triggered in different ways. A first way is that a criterion is met by the prediction model currently trained, meaning that this trained prediction model provides sufficient consistency between the position predictions z^{j}ₖ and the position measurements y^{j}ₖ. Such criterion has been called matching criterion of the training mode in the general part of this description. For example, a criterion such as the following one may be implemented: the norm ∥yⁱₖ - z^{j}ₖ∥ is inferior to a predefined threshold value for several succeeding times k. Another possibility for stopping the training mode period is that drone 1 has received a request for available resources from any other element of the system, including from one of the other drones. Such request may be issued because another function implemented in the drone set requires sufficient communication bandwidth. Still another possibility for stopping the training mode period may be a command issued by a scheduling algorithm. Such scheduling algorithm may be dedicated to distributing the communication resources between various functions of the drone set, whatever these functions, based on assignment rules and respective resource requirements of the functions. At the end of the training mode period, the new prediction model just trained is injected into the prediction module 14, for replacing the previous one. The prediction module 14 then operates using this new prediction model, and the model improvement module 18 switches to the idle mode.

During the idle mode time period, the model improvement module 18 may check continuously the validity of the prediction model that is currently implemented by the prediction module 14. To this purpose, the model improvement module 18 compares the position predictions as resulting from the prediction model currently implemented by the prediction module 14 with the position measurements, i.e. y¹ₖ, y²ₖ and y³ₖ. The operation of the control during the idle mode time period may be fed with a reduced number of basic position measurements, since the prediction model used is of improved validity. Thanks to this, the idle mode is less demanding in measurement and communication resources than the training mode, so that an increased amount of the resources may be assigned to functions other than the distributed control. In particular, the frequency of the basic position measurements which are performed for each drone and their transmission between the drones is set by the model improvement module 18, through the resource control module 16, at higher values in the training mode compared to the values of this frequency as effective in the idle mode. The idle mode time period may be continued until a matching criterion is no longer met between the position measurements y^{j}ₖ and the position predictions as issued by the prediction module 14. This matching criterion for the idle mode may be similar to that of the training mode, but not necessarily. Alternatively, the idle mode time period may be continued until drone 1 receives an indication that an amount of resources is available, or until a switching order is issued by the scheduling algorithm. The model improvement module 18 then switches back to the training mode. It is also possible that the model improvement module 18 in the idle mode assesses continually a reliability of the position measurements y^{j}ₖ and switches into the training mode when it determines that this reliability is good enough for allowing training a new prediction model. Such switch triggering may be promoted by increasing the frequency of the basic position measurements when possible in the idle mode. It is also possible again that in the idle mode, the model improvement module 18 requires to increase temporarily the frequency of the basic position measurements for obtaining resulting measurements with improved reliability.

The invention is not limited to the field of controlling a set of drones, and may be applied advantageously to many other systems comprised of a plurality of user equipments. The number of the user equipments in the system as well as the number of these equipments that are actually used within one user equipment as the subset for implementing the distributed control may be any. It is thus clear that the numbers of four for the user equipments in the system, and three for the user equipments in the subset are not limiting but have been used only for exemplifying purpose.

## Claims

1. A user equipment (1), adapted for implementing a control in a set of user equipments, where said user equipment updates its own state based on state measurements and state predictions obtained for a subset of the user equipments,
wherein said user equipment (1) comprises:
- storage means (13), adapted for storing at least some of the state measurements obtained for each user equipment of the subset, or for storing statistics that are derived from said state measurements obtained for each user equipment of the subset;
- a prediction module (14), adapted for inferring a state prediction for any of the user equipments of the subset, by implementing a prediction model with state measurements or statistics recovered from the storage means (13);
- a state estimation module (15), adapted for issuing a state estimate for each of the user equipments of the subset, by combining the state measurements and the state predictions of said user equipments of the subset;
- a resource control module (16), adapted for selecting configuration parameters intended to control an operation of resources of the user equipments based on the state estimates issued by the state estimation module (15); and
- a state control module (17), adapted for updating the state of the user equipment (1), also based on the state estimates issued by the state estimation module (15),
**characterized in that** said user equipment (1) further comprises:
- a model improvement module (18), adapted for implementing alternately a training mode and an idle mode,
wherein in the training mode, the model improvement module (18) trains the prediction model to be implemented next by the prediction module (14), from the state measurements or statistics that are obtained for the user equipments of the subset or from the state estimates issued by the state estimation module (15),
the model improvement module (18) being furthermore configured for injecting the prediction model as trained in the training mode into the prediction module (14), so that the prediction model injected by the model improvement module (18) into the prediction module (14) is used by said prediction module when said model improvement module is next in the idle mode,
and the model improvement module (18) is further adapted to control the resource control module (16) for adjusting a reliability of the state measurements obtained for each user equipment of the subset at a level during a time period dedicated to the training mode higher than another level of said reliability that is effective during a prior or subsequent time period dedicated to the idle mode.

2. The user equipment (1) of claim 1, wherein the model improvement module (18) is further adapted to assess, during the time period dedicated to the idle mode, a validity of the prediction model which is currently implemented by the prediction module (14), as said prediction model has been previously trained by said model improvement module during the time period dedicated to the training mode.

3. The user equipment (1) of claim 1 or 2, adapted so that, for any of the user equipments of the subset, each state measurement stored by the storage means (13) or used by the state estimation module (15) is obtained from one or several basic state measurements,
and the model improvement module (18) is further adapted to control the resource control module (16) for adjusting a frequency of the basic state measurements that are obtained for each user equipment of the subset, so that a value of said frequency during the time period dedicated to the training mode is higher than another value of said frequency that is effective during the prior or subsequent time period dedicated to the idle mode.

4. The user equipment (1) of any one of claims 1 to 3, adapted so that the state of any of the user equipments of the subset comprises coordinate values of a position of said user equipment of the subset.

5. The user equipment (1) of claim 3 and 4, adapted for operating with the basic state measurements being provided by at least one positioning system, and the basic state measurements for each user equipment of the subset are transmitted wirelessly between the user equipments or internally to each user equipment.

6. The user equipment (1) of any one of claims 1 to 5, wherein the model improvement module (18) is adapted to switch from the training mode to the idle mode once a matching criterion of the training mode is met by the prediction model that is currently being trained, between the state measurements and the state predictions inferred using said prediction model that is currently being trained, or after a request to free some resources has been received by said user equipment, or at a time issued by a scheduling algorithm.

7. The user equipment (1) of any one of claims 1 to 6, wherein the model improvement module (18) is adapted to switch back from the idle mode to the training mode when at least one of the following conditions occurs:
- a matching criterion of the idle mode is no longer met between the state measurements and the state predictions as issued by the prediction module (14);
- after receiving an indication that an amount of the resources is available;
- after receiving an indication that the reliability of the state measurements is above a predetermined threshold; and
- at a time issued by a scheduling algorithm.

8. The user equipment (1) of any one of claims 1 to 7, wherein the configuration parameters selected by the resource control module (16) based on the state estimates issued by the state estimation module (15), and possibly also based on requirements from the state control module (17), are suitable for controlling at least one of a frequency of basic state measurements, a transmission frequency of said basic state measurements, modulation and coding schemes, and at least one transmission power implemented between the user equipments.

9. A process for implementing a control in a set of user equipments (1-4), where each user equipment updates its own state based on state measurements and state predictions obtained for a subset of the user equipments,
wherein at least one of the user equipments performs the following steps:
- storing at least some of the state measurements obtained for each user equipment of the subset, or storing statistics derived from said state measurements obtained for each user equipment of the subset;
- inferring a state prediction for any of the user equipments of the subset, by implementing a prediction model with state measurements or statistics which have been stored previously;
- issuing a respective estimate for the state of each of the user equipments of the subset, by combining the state measurements and state predictions of said user equipments of the subset;
- selecting configuration parameters intended to control an operation of resources of the user equipments based on the state estimates; and
- updating a state of said user equipment also based on the state estimates,
**characterized in that** at least one of the user equipments, referred to as model improvement user equipment (1), operates alternately in a training mode and an idle mode,
wherein in the training mode, the prediction model is trained from the state measurements or statistics that are obtained for each user equipment of the subset, or from the state estimates issued for each user equipment of the subset,
the process furthermore comprising updating the prediction model which is implemented for inferring the state predictions, according to the prediction model as trained in the training mode, and
wherein the configuration parameters are adjusted so that a reliability of the state measurements obtained for each user equipment of the subset is at a level during a time period dedicated to the training mode higher than another level of said reliability that is effective during a prior or subsequent time period dedicated to the idle mode.

10. The process of claim 9 wherein, in the idle mode, a validity of the prediction model which is currently implemented is assessed, as said prediction model has been previously trained during the time period dedicated to the training mode.

11. The process of claim 9 or 10 wherein, for any of the user equipments of the subset, each state measurement stored or used for issuing one of the state estimates is obtained from one or several basic state measurements,
and a frequency of the basic state measurements that are obtained for each user equipment of the subset is adjusted so that a value of said frequency during the time period dedicated to the training mode is higher than another value of said frequency that is effective during the prior or subsequent time period dedicated to the idle mode.

12. The process of any one of claims 9 to 11, wherein the model improvement user equipment (1) meets at least one of claims 1 to 3.

13. The process of any one of claims 9 to 12, wherein the state of any of the user equipments of the subset comprises coordinate values of a position of said user equipment of the subset.

14. The process of claim 11 and 13, wherein the basic state measurements are provided by at least one positioning system, and the basic state measurements for each user equipment of the subset are transmitted to the model improvement user equipment (1) wirelessly or internally to said model improvement user equipment.

15. The process of any one of claims 9 to 14, wherein the model improvement user equipment (1) switches from the training mode to the idle mode once a matching criterion of the training mode is met by the prediction model that is currently being trained, between the state measurements and the state predictions inferred using said prediction model that is currently being trained, or after a request to free some resources has been received by said model improvement user equipment, or at a time issued by a scheduling algorithm.

16. The process of any one of claims 9 to 15, wherein the model improvement user equipment switches back from the idle mode to the training mode when at least one of the following conditions occurs:
- a matching criterion of the idle mode is no longer met between the state measurements and the state predictions as used for issuing the state estimates;
- after receiving an indication that an amount of the resources is available;
- after receiving an indication that the reliability of the state measurements is above a predetermined threshold; and
- at a time issued by a scheduling algorithm.

17. The process of any one of claims 9 to 16, wherein the configuration parameters are selected based on the state estimates, and possibly also based on control requirements, for controlling at least one of a frequency of basic state measurements, a transmission frequency of said basic state measurements, modulation and coding schemes, and at least one transmission power implemented between the user equipments.

18. Set (1-4) of user equipments adapted to implement a control, wherein at least one of said user equipments is in accordance with any one of claims 1 to 8.

## Patentansprüche

1. Nutzervorrichtung (1), welche zum Implementieren einer Steuerung in einem Satz von Nutzervorrichtungen angepasst ist, wobei die Nutzervorrichtung ihren eigenen Zustand aktualisiert basierend auf Zustandsmessungen und Zustandsvorhersagen, welche für eine Teilmenge der Nutzervorrichtungen erhalten sind,
wobei die Nutzervorrichtung (1) umfasst:
- Speichermittel (13), welche zum Speichern von wenigstens einigen der Zustandsmessungen angepasst sind, welche für jede Nutzervorrichtung der Teilmenge erhalten sind, oder zum Speichern von Statistiken angepasst sind, welche von den Zustandsmessungen abgeleitet sind, welche für jede Nutzervorrichtung der Teilmenge erhalten sind;
- ein Vorhersagemodul (14), welches zum Inferieren einer Zustandsvorhersage für eine der Nutzervorrichtungen der Teilmenge durch Implementieren eines Vorhersagemodells mit Zustandsmessungen oder Statistiken angepasst ist, welche von den Speichermitteln (13) wiedererlangt sind;
- ein Zustandsabschätzungsmodul (15), welches zum Ausgeben einer Zustandsschätzung für jede der Nutzervorrichtungen der Teilmenge durch Kombinieren der Zustandsmessungen und der Zustandsvorhersagen der Nutzervorrichtungen der Teilmenge angepasst ist;
- ein Ressourcensteuerungsmodul (16), welches zum Auswählen von Konfigurationsparametern angepasst ist, welche zum Steuern eines Betriebs von Ressourcen der Nutzervorrichtungen vorgesehen sind, basierend auf den Zustandsschätzungen, welche durch das Zustandsschätzungsmodul (15) ausgegeben sind; und
- ein Zustandssteuerungsmodul (17), welches zum Aktualisieren des Zustands der Nutzervorrichtung (1) angepasst ist, ebenfalls basierend auf den Zustandsschätzungen, welche durch das Zustandsschätzungsmodul (15) ausgegeben sind,
**dadurch gekennzeichnet, dass** die Nutzervorrichtung (1) ferner umfasst:
- ein Modellverbesserungsmodul (18), welches zum abwechselnden Implementieren eines Trainingsmodus und eines Ruhemodus angepasst ist,
wobei das Modellverbesserungsmodul (18) in dem Trainingsmodus das Vorhersagemodell, welches als nächstes durch das Vorhersagemodul (14) zu implementieren ist, mit den Zustandsmessungen oder Statistiken, welche für die Nutzervorrichtungen der Teilmenge erhalten sind, oder mit den Zustandsschätzungen trainiert, welche durch das Zustandsschätzungsmodul (15) ausgegeben sind,
wobei das Modellverbesserungsmodul (18) ferner dazu eingerichtet ist, das Vorhersagemodell, nachdem es in dem Trainingsmodus trainiert ist, in das Vorhersagemodul zu speisen (14), sodass das Vorhersagemodell, welches durch das Modellverbesserungsmodul (18) in das Vorhersagemodul (14) eingespeist ist, durch das Vorhersagemodul verwendet ist, wenn das Modellverbesserungsmodul sich als nächstes im Ruhemodus befindet,
und wobei das Modellverbesserungsmodul (18) ferner dazu angepasst ist, das Ressourcensteuerungsmodul (16) zum Anpassen einer Zuverlässigkeit der Zustandsmessungen zu steuern, welche für jede Nutzervorrichtung der Teilmenge während eines Zeitintervalls, welches dem Trainingsmodus zugeordnet ist, auf einem Niveau erhalten sind, welches höher als ein anderes Niveau der Zuverlässigkeit ist, welches während eines vorherigen oder nachfolgenden Zeitintervalls in Kraft ist, welches dem Ruhemodus zugeordnet ist.

2. Nutzervorrichtung (1) nach Anspruch 1, wobei das Modellverbesserungsmodul (18) ferner zum Bewerten angepasst ist, während des Zeitintervalls, welches dem Ruhemodus zugeordnet ist, einer Validität des Vorhersagemodells, welches gegenwärtig durch das Vorhersagemodul (14) implementiert ist, nachdem das Vorhersagemodell vorweg durch das Modellverbesserungsmodul während eines Zeitintervalls trainiert worden ist, welches dem Trainingsmodus zugeordnet ist.

3. Nutzervorrichtung (1) nach Anspruch 1 oder 2, angepasst sodass, für eine der Nutzervorrichtungen der Teilmenge, jede Zustandsmessung, welche durch die Speichermittel (13) gespeichert ist oder durch das Zustandsabschätzungsmodul (15) verwendet ist, von einer oder mehreren grundlegenden Zustandsmessungen erhalten ist,
und wobei das Modellverbesserungsmodul (18) ferner dazu angepasst ist, das Ressourcensteuerungsmodul (16) zum Anpassen einer Frequenz der grundlegenden Zustandsmessungen zu steuern, welche für jede Nutzervorrichtung der Teilmenge erhalten sind, sodass ein Wert der Frequenz während des Zeitintervalls, welches dem Trainingsmodus zugeordnet ist, höher ist als ein anderer Wert der Frequenz, welcher während des vorherigen oder nachfolgenden Zeitintervalls in Kraft ist, welches dem Ruhemodus zugeordnet ist.

4. Nutzervorrichtung (1) nach einem der Ansprüche 1 bis 3, angepasst, sodass der Zustand von einer der Nutzervorrichtungen der Teilmenge Koordinatenwerte einer Position der Nutzervorrichtung der Teilmenge umfasst.

5. Nutzervorrichtung (1) nach Anspruch 3 und 4, angepasst zum Arbeiten mit den grundlegenden Zustandsmessungen, welche durch wenigstens ein Positionierungssystem bereitgestellt sind, und wobei die grundlegenden Zustandsmessungen für jede Nutzervorrichtung der Teilmenge kabelfrei zwischen den Nutzervorrichtungen oder intern zu jeder Nutzervorrichtung übertragen sind.

6. Nutzervorrichtung (1) nach einem der Ansprüche 1 bis 5, wobei das Modellverbesserungsmodul (18) dazu angepasst ist, von dem Trainingsmodus in den Ruhemodus zu wechseln, sobald ein Abgleichkriterium des Trainingsmodus durch das Vorhersagemodell erfüllt ist, welches gegenwärtig in Training ist, zwischen den Zustandsmessungen und den Zustandsvorhersagen, welche unter Verwendung des Vorhersagemodells inferiert sind, welches gegenwärtig in Training ist, oder nachdem eine Anfrage, einige Ressourcen freizugeben, durch die Nutzervorrichtung erhalten ist, oder zu einer Zeit, welche durch einen Planungsalgorithmus ausgegeben ist.

7. Nutzervorrichtung (1) nach einem der Ansprüche 1 bis 6, wobei das Modellverbesserungsmodul (18) dazu angepasst ist, von dem Ruhemodus zurück in den Trainingsmodus zu wechseln, wenn wenigstens eine der folgenden Bedingungen erfüllt ist:
- ein Abgleichkriterium des Ruhemodus ist nicht länger erfüllt zwischen den Zustandsmessungen und den Zustandsvorhersagen, nachdem sie durch das Vorhersagemodul (14) ausgegeben sind;
- nach einem Erhalten einer Indikation, dass eine Menge der Ressourcen verfügbar ist;
- nach einem Erhalten einer Indikation, dass die Zuverlässigkeit der Zustandsmessungen über einem vorbestimmten Schwellenwert liegt; und
- zu einer Zeit, welche durch einen Planungsalgorithmus ausgegeben ist.

8. Nutzervorrichtung (1) nach einem der Ansprüche 1 bis 7, wobei die Konfigurationsparameter, welche durch das Ressourcensteuerungsmodul (16) basierend auf den Zustandsabschätzungen, welche durch das Zustandsabschätzungsmodul (15) ausgegeben sind, und möglicherweise auch basierend auf Anforderungen von dem Zustandssteuerungsmodul (17) ausgewählt sind, zum Steuern von wenigstens einem von einer Frequenz von grundlegenden Zustandsmessungen, einer Übertragungsfrequenz der grundlegenden Zustandsmessungen, Modulations- und Programmierungsplänen, und wenigstens einer Übertragungsleistung geeignet sind, welche zwischen den Nutzervorrichtungen implementiert ist.

9. Verfahren zum Implementieren einer Steuerung in einem Satz von Nutzervorrichtungen (1-4), wobei jede Nutzervorrichtung ihren eigenen Zustand aktualisiert basierend auf Zustandsmessungen und Zustandsvorhersagen, welche für eine Teilmenge der Nutzervorrichtungen erhalten werden,
wobei wenigstens eine der Nutzervorrichtungen die folgenden Schritte ausführt:
- Speichern von wenigstens einigen der Zustandsmessungen, welche für jede Nutzervorrichtung der Teilmenge erhalten werden, oder Speichern von Statistiken, welche von den Zustandsmessungen abgeleitet werden, welche für jede Nutzervorrichtung der Teilmenge erhalten werden;
- Inferieren einer Zustandsvorhersage für eine der Nutzervorrichtungen der Teilmenge durch Implementieren eines Vorhersagemodells mit Zustandsmessungen oder Statistiken, welche vorweg gespeichert wurden;
- Ausgeben einer entsprechenden Abschätzung für den Zustand von jeder der Nutzervorrichtungen der Teilmenge durch Kombinieren der Zustandsmessungen und der Zustandsvorhersagen der Nutzervorrichtungen der Teilmenge;
- Auswählen von Konfigurationsparametern, welche dazu vorgesehen sind, einen Betrieb von Ressourcen der Nutzervorrichtungen basierend auf den Zustandsabschätzungen zu steuern; und
- Aktualisieren eines Zustands der Nutzervorrichtung ebenfalls basierend auf den Zustandsabschätzungen,
**dadurch gekennzeichnet, dass** wenigstens eine der Nutzervorrichtungen, bezeichnet als Modellverbesserungsnutzervorrichtung (1), abwechselnd in einem Trainingsmodus und einem Ruhemodus arbeitet,
wobei das Vorhersagemodell in dem Trainingsmodus mit den Zustandsmessungen oder Statistiken, welche für jede Nutzervorrichtung der Teilmenge erhalten werden, oder mit den Zustandsabschätzungen trainiert wird, welche für jede Nutzervorrichtung der Teilmenge ausgegeben werden,
wobei das Verfahren ferner ein Aktualisieren des Vorhersagemodells umfasst, welches für ein Inferieren der Zustandsvorhersagen entsprechend dem Vorhersagemodell implementiert wird, nachdem es im Trainingsmodus trainiert wurde, und
wobei die Konfigurationsparameter derart angepasst sind, dass eine Zuverlässigkeit der Zustandsmessungen, welche für jede Nutzervorrichtung der Teilmenge während eines Zeitintervalls erhalten sind, welches dem Trainingsmodus zugeordnet ist, auf einem Niveau ist, welches höher ist als ein anderes Niveau der Zuverlässigkeit, welches in Kraft ist während eines vorherigen oder nachfolgenden Zeitintervalls, welches dem Ruhemodus zugeordnet ist.

10. Verfahren nach Anspruch 9, wobei, in dem Ruhemodus, eine Validität des Vorhersagemodells, welches gegenwärtig implementiert wird, bewertet wird, nachdem das Vorhersagemodell vorweg während des Zeitintervalls trainiert worden ist, welches dem Trainingsmodus zugeordnet ist.

11. Verfahren nach Anspruch 9 oder 10, wobei, für eine der Nutzervorrichtungen der Teilmenge, jede Zustandsmessung, welche gespeichert oder zum Ausgeben einer der Zustandsabschätzungen verwendet wird, von einer oder mehreren grundlegenden Zustandsmessungen erhalten wird,
und eine Frequenz der grundlegenden Zustandsmessungen, welche für jede Nutzervorrichtung der Teilmenge erhalten werden, angepasst wird, sodass ein Wert der Frequenz während des Zeitintervalls, welches dem Trainingsmodus zugeordnet ist, höher ist als ein anderer Wert der Frequenz, welcher während des vorherigen oder nachfolgenden Zeitintervalls in Kraft ist, welches dem Ruhemodus zugeordnet ist.

12. Verfahren nach einem der Ansprüche 9 bis 11, wobei die Modellverbesserungsnutzervorrichtung (1) wenigstens einem der Ansprüche 1 bis 3 entspricht.

13. Verfahren nach einem der Ansprüche 9 bis 12, wobei der Zustand einer der Nutzervorrichtungen der Teilmenge Koordinatenwerte einer Position der Nutzervorrichtung der Teilmenge umfasst.

14. Verfahren nach Anspruch 11 und 13, wobei die grundlegenden Zustandsmessungen durch wenigstens ein Positionierungssystem bereitgestellt werden und die grundlegenden Zustandsmessungen für jede Nutzervorrichtung der Teilmenge kabelfrei zu der Modellverbesserungsnutzervorrichtung (1) oder intern zu der Modellverbesserungsnutzervorrichtung übertragen werden.

15. Verfahren nach einem der Ansprüche 9 bis 14, wobei die Modellverbesserungsnutzervorrichtung (1) von dem Trainingsmodus in den Ruhemodus wechselt, sobald ein Abgleichkriterium des Trainingsmodus durch das Vorhersagemodell erfüllt wird, welches gegenwärtig trainiert wird, zwischen den Zustandsmessungen und den Zustandsvorhersagen, welche inferiert werden, indem das Vorhersagemodell verwendet wird, welches gegenwärtig trainiert wird, oder nachdem eine Anfrage, einige Ressourcen freizugeben, durch die Modellverbesserungsnutzervorrichtung erhalten wird, oder zu einer Zeit, welche durch einen Planungsalgorithmus ausgegeben wird.

16. Verfahren nach einem der Ansprüche 9 bis 15, wobei die Modellverbesserungsnutzervorrichtung von dem Ruhemodus zurück in den Trainingsmodus wechselt, wenn wenigstens eine der folgenden Bedingungen erfüllt wird:
- ein Abgleichkriterium des Ruhemodus ist nicht länger erfüllt zwischen den Zustandsmessungen und den Zustandsvorhersagen, nachdem sie zu einem Ausgeben der Zustandsabschätzungen verwendet werden;
- nachdem eine Indikation erhalten wird, dass eine Menge an Ressourcen verfügbar ist;
- nachdem eine Indikation erhalten wird, dass die Zuverlässigkeit der Zustandsmessungen über einem vorbestimmten Schwellenwert liegt; und
- zu einer Zeit, welche durch einen Planungsalgorithmus ausgegeben wird.

17. Verfahren nach einem der Ansprüche 9 bis 16, wobei die Konfigurationsparameter ausgewählt werden, basierend auf den Zustandsabschätzungen und möglicherweise auch basierend auf Steuerungsanforderungen, zum Steuern von wenigstens einem von einer Frequenz von grundlegenden Zustandsmessungen, einer Übertragungsfrequenz der grundlegenden Zustandsmessungen, Modulations- und Programmierungsplänen, und wenigstens einer Übertragungsleistung, welche zwischen den Nutzervorrichtungen implementiert wird.

18. Satz (1-4) von Nutzervorrichtungen, welche dazu angepasst sind, eine Steuerung zu implementieren, wobei wenigstens eine der Nutzervorrichtungen einem der Ansprüche 1 bis 8 entspricht.

## Revendications

1. Équipement utilisateur (1), adapté pour mettre en œuvre un contrôle dans un ensemble d'équipements utilisateurs, où ledit équipement utilisateur met à jour son propre état sur la base de mesures d'état et de prédictions d'état obtenues pour un sous-ensemble des équipements utilisateurs,
dans lequel ledit équipement utilisateur (1) comprend :
- des moyens de stockage (13), adaptés pour stocker au moins certaines des mesures d'état obtenues pour chaque équipement utilisateur du sous-ensemble, ou pour stocker des statistiques qui sont dérivées desdites mesures d'état obtenues pour chaque équipement utilisateur du sous-ensemble ;
- un module de prédiction (14), adapté pour déduire une prédiction d'état pour l'un quelconque des équipements utilisateurs du sous-ensemble, en mettant en œuvre un modèle de prédiction avec des mesures d'état ou des statistiques récupérées à partir des moyens de stockage (13) ;
- un module d'estimation d'état (15), adapté pour délivrer une estimation d'état pour chacun des équipements utilisateurs du sous-ensemble, en combinant les mesures d'état et les prédictions d'état desdits équipements utilisateurs du sous-ensemble ;
- un module de contrôle de ressources (16), adapté pour sélectionner des paramètres de configuration destinés à contrôler un fonctionnement de ressources des équipements utilisateurs sur la base des estimations d'état délivrées par le module d'estimation d'état (15) ; et
- un module de contrôle d'état (17), adapté pour mettre à jour l'état de l'équipement utilisateur (1), également sur la base des estimations d'état délivrées par le module d'estimation d'état (15),
**caractérisé en ce que** ledit équipement utilisateur (1) comprend en outre :
- un module d'amélioration de modèle (18), adapté pour mettre en œuvre alternativement un mode d'entraînement et un mode inactif,
dans lequel, dans le mode d'entraînement, le module d'amélioration de modèle (18) entraîne le modèle de prédiction devant être mis en œuvre ensuite par le module de prédiction (14), à partir des mesures d'état ou des statistiques qui sont obtenues pour les équipements utilisateurs du sous-ensemble ou à partir des estimations d'état délivrées par le module d'estimation d'état (15),
le module d'amélioration de modèle (18) étant en outre configuré pour injecter le modèle de prédiction tel qu'entraîné dans le mode d'entraînement, dans le module de prédiction (14), de sorte que le modèle de prédiction injecté par le module d'amélioration de modèle (18) dans le module de prédiction (14) soit utilisé par ledit module de prédiction lorsque ledit module d'amélioration de modèle est ensuite dans le mode inactif,
et le module d'amélioration de modèle (18) est adapté en outre pour contrôler le module de contrôle de ressources (16) pour ajuster une fiabilité des mesures d'état obtenues pour chaque équipement utilisateur du sous-ensemble à un niveau pendant une période de temps dédiée au mode d'entraînement supérieur à un autre niveau de ladite fiabilité qui est effectif pendant une période de temps antérieure ou ultérieure dédiée au mode inactif.

2. Équipement utilisateur (1) selon la revendication 1, dans lequel le module d'amélioration de modèle (18) est adapté en outre pour évaluer, pendant la période de temps dédiée au mode inactif, une validité du modèle de prédiction qui est en cours de mise en œuvre par le module de prédiction (14), tel que ledit modèle de prédiction a été préalablement entraîné par ledit module d'amélioration de modèle pendant la période de temps dédiée au mode d'entraînement.

3. Équipement utilisateur (1) selon la revendication 1 ou 2, adapté de sorte que, pour l'un quelconque des équipements utilisateurs du sous-ensemble, chaque mesure d'état stockée par les moyens de stockage (13) ou utilisée par le module d'estimation d'état (15) soit obtenue à partir d'une ou plusieurs mesures d'état de base,
et le module d'amélioration de modèle (18) est adapté en outre pour contrôler le module de contrôle de ressources (16) pour ajuster une fréquence des mesures d'état de base qui sont obtenues pour chaque équipement utilisateur du sous-ensemble, de sorte qu'une valeur de ladite fréquence pendant la période de temps dédiée au mode d'entraînement soit supérieure à une autre valeur de ladite fréquence qui est effective pendant la période de temps antérieure ou ultérieure dédiée au mode inactif.

4. Équipement utilisateur (1) selon l'une quelconque des revendications 1 à 3, adapté de sorte que l'état de l'un quelconque des équipements utilisateurs du sous-ensemble comprenne des valeurs de coordonnées d'une position dudit équipement utilisateur du sous-ensemble.

5. Équipement utilisateur (1) selon les revendications 3 et 4, adapté pour fonctionner avec les mesures d'état de base qui sont fournies par au moins un système de localisation, et les mesures d'état de base pour chaque équipement utilisateur du sous-ensemble sont émises sans fil entre les équipements utilisateurs ou de manière interne à chaque équipement utilisateur.

6. Équipement utilisateur (1) selon l'une quelconque des revendications 1 à 5, dans lequel le module d'amélioration de modèle (18) est adapté pour passer du mode d'entraînement au mode inactif une fois qu'un critère de correspondance du mode d'entraînement est rempli par le modèle de prédiction qui est en train d'être entraîné, entre les mesures d'état et les prédictions d'état déduites en utilisant ledit modèle de prédiction qui est en train d'être entraîné, ou après qu'une requête pour libérer certaines ressources a été reçue par ledit équipement utilisateur, ou à un moment délivré par un algorithme de planification.

7. Équipement utilisateur (1) selon l'une quelconque des revendications 1 à 6, dans lequel le module d'amélioration de modèle (18) est adapté pour repasser du mode inactif au mode d'entraînement lorsqu'au moins une des conditions suivantes se produit :
- un critère de correspondance du mode inactif n'est plus rempli entre les mesures d'état et les prédictions d'état telles que délivrées par le module de prédiction (14) ;
- après la réception d'une indication de la disponibilité d'une quantité des ressources ;
- après la réception d'une indication du dépassement d'un seuil prédéterminé par la fiabilité des mesures d'état ; et
- à un moment délivré par un algorithme de planification.

8. Équipement utilisateur (1) selon l'une quelconque des revendications 1 à 7, dans lequel les paramètres de configuration sélectionnés par le module de contrôle de ressources (16) sur la base des estimations d'état délivrées par le module d'estimation d'état (15), et éventuellement également sur la base d'exigences provenant du module de contrôle d'état (17), sont appropriés pour contrôler au moins un parmi une fréquence de mesures d'état de base, une fréquence de transmission desdites mesures d'état de base, des schémas de modulation et de codage et au moins une puissance d'émission mise en œuvre entre les équipements utilisateurs.

9. Procédé pour mettre en œuvre un contrôle dans un ensemble d'équipements utilisateurs (1-4), où chaque équipement utilisateur met à jour son propre état sur la base de mesures d'état et de prédictions d'état obtenues pour un sous-ensemble des équipements utilisateurs,
dans lequel au moins un des équipements utilisateurs réalise les étapes suivantes :
- le stockage d'au moins certaines des mesures d'état obtenues pour chaque équipement utilisateur du sous-ensemble, ou le stockage de statistiques dérivées desdites mesures d'état obtenues pour chaque équipement utilisateur du sous-ensemble ;
- la déduction d'une prédiction d'état pour l'un quelconque des équipements utilisateurs du sous-ensemble, en mettant en œuvre un modèle de prédiction avec des mesures d'état ou des statistiques qui ont été stockées préalablement ;
- la délivrance d'une estimation respective pour l'état de chacun des équipements utilisateurs du sous-ensemble, en combinant les mesures d'état et les prédictions d'état desdits équipements utilisateurs du sous-ensemble ;
- la sélection de paramètres de configuration destinés à contrôler un fonctionnement de ressources des équipements utilisateurs sur la base des estimations d'état ; et
- la mise à jour d'un état dudit équipement utilisateur également sur la base des estimations d'état,
**caractérisé en ce qu'**au moins un des équipements utilisateurs, appelé équipement utilisateur (1) à amélioration de modèle, fonctionne alternativement dans un mode d'entraînement et un mode inactif,
dans lequel, dans le mode d'entraînement, le modèle de prédiction est entraîné à partir des mesures d'état ou des statistiques qui sont obtenues pour chaque équipement utilisateur du sous-ensemble, ou à partir des estimations d'état délivrées pour chaque équipement utilisateur du sous-ensemble,
le procédé comprenant de plus la mise à jour du modèle de prédiction qui est mis en œuvre pour déduire les prédictions d'état, conformément au modèle de prédiction tel qu'entraîné dans le mode d'entraînement, et
dans lequel les paramètres de configuration sont ajustés de sorte qu'une fiabilité des mesures d'état obtenues pour chaque équipement utilisateur du sous-ensemble soit à un niveau pendant une période de temps dédiée au mode d'entraînement supérieur à un autre niveau de ladite fiabilité qui est effectif pendant une période de temps antérieure ou ultérieure dédiée au mode inactif.

10. Procédé selon la revendication 9 dans lequel, dans le mode inactif, une validité du modèle de prédiction qui est en train d'être mis en œuvre est évaluée, tel que ledit modèle de prédiction a été préalablement entraîné pendant la période de temps dédiée au mode d'entraînement.

11. Procédé selon la revendication 9 ou 10 dans lequel, pour l'un quelconque des équipements utilisateurs du sous-ensemble, chaque mesure d'état stockée ou utilisée pour délivrer l'une des estimations d'état est obtenue à partir d'une ou plusieurs mesures d'état de base,
et une fréquence des mesures d'état de base qui sont obtenues pour chaque équipement utilisateur du sous-ensemble est ajustée de sorte qu'une valeur de ladite fréquence pendant la période de temps dédiée au mode d'entraînement soit supérieure à une autre valeur de ladite fréquence qui est effective pendant la période de temps antérieure ou ultérieure dédiée au mode inactif.

12. Procédé selon l'une quelconque des revendications 9 à 11, dans lequel l'équipement utilisateur (1) à amélioration de modèle est conforme à au moins une des revendications 1 à 3.

13. Procédé selon l'une quelconque des revendications 9 à 12, dans lequel l'état de l'un quelconque des équipements utilisateurs du sous-ensemble comprend des valeurs de coordonnées d'une position dudit équipement utilisateur du sous-ensemble.

14. Procédé selon les revendications 11 et 13, dans lequel les mesures d'état de base sont fournies par au moins un système de positionnement, et les mesures d'état de base pour chaque équipement utilisateur du sous-ensemble sont transmises vers l'équipement utilisateur (1) à amélioration de modèle sans fil ou de manière interne audit équipement utilisateur à amélioration de modèle.

15. Procédé selon l'une quelconque des revendications 9 à 14, dans lequel l'équipement utilisateur (1) à amélioration de modèle passe du mode d'entraînement au mode inactif une fois qu'un critère de correspondance du mode d'entraînement est rempli par le modèle de prédiction qui est en train d'être entraîné, entre les mesures d'état et les prédictions d'état déduites en utilisant ledit modèle de prédiction qui est en train d'être entraîné, ou après qu'une requête pour libérer certaines ressources a été reçue par ledit équipement utilisateur à amélioration de modèle, ou à un moment délivré par un algorithme de planification.

16. Procédé selon l'une quelconque des revendications 9 à 15, dans lequel l'équipement utilisateur à amélioration de modèle repasse du mode inactif au mode d'entraînement lorsqu'au moins une des conditions suivantes se produit :
- un critère de correspondance du mode inactif n'est plus rempli entre les mesures d'état et les prédictions d'état telles qu'utilisées pour délivrer les estimations d'état ;
- après la réception d'une indication de la disponibilité d'une quantité des ressources ;
- après la réception d'une indication du dépassement d'un seuil prédéterminé par la fiabilité des mesures d'état ; et
- à un moment délivré par un algorithme de planification.

17. Procédé selon l'une quelconque des revendications 9 à 16, dans lequel les paramètres de configuration sont sélectionnés sur la base des estimations d'état, et éventuellement également sur la base d'exigences de contrôle, pour contrôler au moins un parmi une fréquence de mesures d'état de base, une fréquence de transmission desdites mesures d'état de base, des schémas de modulation et de codage et au moins une puissance d'émission mise en œuvre entre les équipements utilisateurs.

18. Ensemble d'équipements utilisateurs (1-4) adaptés pour mettre en œuvre un contrôle, dans lequel au moins un parmi lesdits équipements utilisateurs est conforme à l'une quelconque des revendications 1 à 8.
